# EUROPEAN PATENT APPLICATION

(11) **EP 2 555 582 A2**
(43) Date of publication of application: **06.02.2013**
(21) Application number: 12178173.6
(22) Date of filing: 27.07.2012
(51) Int. Cl.: H04W 76/02

(54) **Communication system with bluetooth access point**

(30) Priority: 05.08.2011 DK 201170433
(71) Applicant: Bluetown ApS, 2730 Herlev (DK)
(72) Inventor: Kristensen, Johnny, 2970 Hørsholm (DK); Strömsted, Rasmus, 2100 Copenhagen Ø (DK)
(74) Representative: Olsen, Henrik Bagger

(57) **Abstract**

The present invention relates to a method of providing call connections from a Bluetooth or Wi-Fi enabled mobile telephone to a destination through a parking meter or utility meter device having a Bluetooth or Wi-Fi access point integrated therein. The invention also relates to a corresponding communication system comprising a Bluetooth or Wi-Fi enabled mobile telephone and a Bluetooth or Wi-Fi access point housed in a parking meter or utility meter device.

## Description

The present invention relates to a method of providing call connections from a Bluetooth or Wi-Fi enabled mobile telephone to a destination through a parking meter or utility meter device having a Bluetooth or Wi-Fi access point integrated therein. The invention also relates to a corresponding communication system comprising a Bluetooth or Wi-Fi enabled mobile telephone and a Bluetooth or Wi-Fi access point housed in a parking meter or utility meter device.

### BACKGROUND OF THE INVENTION

The present invention exploits existing internet connectivity in so-called "intelligent" parking meters and utility meter devices by adding Bluetooth or Wi-Fi access points such that these devices can form part of a mobile phone communication system. The communication system may comprise a Bluetooth or Wi-Fi enabled mobile telephone executing a software-implemented client or application which is adapted to function as a call center. The call-center is adapted to controlling outgoing and incoming communications to be directed via an established Bluetooth or Wi-Fi connection between the mobile telephone and the Bluetooth or Wi-Fi access point and further via the internet to and from a VoIP server controlling call connections.

US 2005/0114262 discloses processing of payments for goods and services using electronic payment via a peer-to-peer network. A peer in the network may be a parking meter with a Bluetooth communications device coupled to a cellular phone. The parking meter is furthermore coupled to the internet or WAN through a data relay device or bridge.

WO 2009/115089 A1, filed by the present applicant, discloses a communication system comprising at least one mobile telephone having Bluetooth capability and software- implementing possibilities, at least one Bluetooth access point providing an internet connection, at least one internet-connected VOIP server providing call connections in the form of PSTN, GSM, VOIP, etc. There is further provided a software-implemented client functioning as a call centre and controlling outgoing and incoming communications to be directed via the Bluetooth connection between the mobile telephone and the Bluetooth access point and via the internet to and from the VOIP server controlling the call connections. This provides the possibility of making calls at a reduced price or even free.

Based on the above-mentioned prior art, it is one object of the present invention to provide a communication system and methodology providing Bluetooth or Wi-Fi internet access points at convenient locations at home or in the city for the subscribers or users. In addition, the invention should preferably be able establish or implement the Bluetooth or Wi-Fi internet access points at low cost with minimal hardware and requiring minimal end-user interaction or effort such that rapid expansion or roll-out of the present communication system and methodology is facilitated.

### SUMMARY OF INVENTION

A first aspect of the invention relates to a method of providing call connections from a Bluetooth enabled mobile telephone to a destination through a parking meter or utility meter device. The method comprising steps of:
a) providing a Bluetooth or Wi-Fi access point within a parking meter or a utility meter device connected to the internet,
b) providing an internet-connected VOIP server for establishing call connections through a voice communications channel such as PSTN, GSM, VoIP to the destination,
c) executing a software-implemented client or application in said Bluetooth or Wi-Fi enabled mobile telephone functioning as a call center controlling outgoing and incoming communications,
d) continuously detecting, by said Bluetooth or Wi-Fi enabled client, a presence of Bluetooth or Wi-Fi access points in parking meters or utility meter devices with internet connection,
e) establishing the Bluetooth connection between a detected Bluetooth access point and the Bluetooth enabled mobile telephone or establishing a Wi-Fi connection between a detected Wi-Fi access point and the Wi-Fi enabled mobile telephone,
f) connecting to the internet through the established Bluetooth or Wi-Fi connection and acquiring an IP address for the Bluetooth enabled mobile telephone whereby call connections to and from the Bluetooth or Wi-Fi enabled mobile telephone can be established using the Bluetooth or Wi-Fi connection, said IP address and the VoIP server.

In a particularly advantageous embodiment of the present method the following steps are executed subsequent to step e):
e1) establishing a plurality of Bluetooth connections between a plurality of detected Bluetooth access points housed in respective parking meters,
e2) monitoring a quality of each of the established Bluetooth connections,
e3) transmitting VoIP data through the Bluetooth connection with the highest quality. In this manner the software-implemented client is adapted to seamlessly hand-over the call-connection between individual parking meters if or when the mobile phone user moves about within the city area housing or enclosing the plurality of parking meters. The quality of each of the plurality of Bluetooth connections may be evaluated by numerous methods for example by detecting its packet loss.

A second aspect of the invention relates to a communication system comprising:
- a Bluetooth or Wi-Fi enabled mobile telephone controlled by an operating system configured to execute a software-implemented client or application stored in memory of the mobile telephone. A parking meter or utility meter device has a Bluetooth or Wi-Fi access point installed therein and further comprises an internet connection. The communication system further comprises an internet-connected VoIP server providing call connections through a voice communications channel such as PSTN, GSM, VoIP. The software-implemented client or application is adapted to function as a call center controlling outgoing and incoming communications to be directed via a Bluetooth or Wi-Fi connection between the mobile telephone and the Bluetooth or Wi-Fi access point, respectively, and via the internet to and from the VoIP server controlling the call connections.

The present communication system comprises an internet enabled parking meter or utility meter device with an integrated Bluetooth or Wi-Fi access point. Likewise, the present method of providing call connections from a Bluetooth enabled mobile telephone to a destination utilizes a Bluetooth or Wi-Fi access point arranged within a parking meter or a utility meter device. The present invention thereby supports license-free mobile phone conversations to subscribers or users situated e.g. in densely populated city centers where so-called "intelligent" parking meters often are arranged in high density making Bluetooth or Wi-Fi access points readily available. Likewise, private or public utility meter devices can enjoy significant additional benefits at minimal incremental costs from the addition of the Bluetooth or Wi-Fi access point. The installation and presence of the Bluetooth or Wi-Fi access point or points can go essential unnoticed by residents, employees or workers such that the home or office building is spared from extra wiring and installation of new electronics devices. The household residents or city visitors can use their existing mobile phones, after download and installation of the software-implemented client or application, to place free-of-charge calls by internet telephony whenever they are situated within range of a parking meter or utility meter device with a Bluetooth or Wi-Fi access point.

The software-implemented client or application preferably comprises a program routine or module for acquiring and registering an IP address of the mobile telephone for receiving calls via VoIP. In this embodiment, the software-implemented client may be adapted to emulate the Bluetooth access point connection to provide an IP address for the Bluetooth enabled mobile telephone or mobile phone. Consequently, the Bluetooth connection between the detected Bluetooth access point and the mobile phone is brought to function as any other VoIP data communications channel or connection having an IP address such as W-Fi, Ethernet, DUN (dial-up network), etc. The skilled person will appreciate that the term "mobile telephone" as used herein in addition to a traditional mobile or cellular phone encompasses so-called smartphones with enhanced functionality such as Web-browsers, email clients, cameras, PDA-functionality etc.

In a number of advantageous embodiments of the invention, the utility meter device comprises a household utility meter such as an electricity meter, a petrol meter, a gas meter or a water meter. By exploiting the rapid and wide-spread growth of so-called intelligent electricity meters, i.e. with build-in internet connectivity, the addition of the present Bluetooth or Wi-Fi access point typically represents a minor cost. The installation of the present Bluetooth or Wi-Fi access points may go unnoticed by the residents of the house or building in which the intelligent electricity meter monitors and measures electricity consumption.

Embodiments that includes a Bluetooth access point preferably comprises a Bluetooth access point which is compatible with one or more official Bluetooth standard(s), as adopted by the Bluetooth Special Interest Group, such as Bluetooth standard versions 2.0, 2.1, 3.0, 3.0+HS and 4.0. Likewise, the Wi-Fi access point is preferably compatible with anyone of the official IEEE 802.11 family of standards adopted by the Wi-Fi Alliance such as anyone of the IEEE 802.11 b/g/n standards.

In one preferred embodiment, the parking meter or a utility meter device comprises an internet communications interface configured to receive and transmit TCP/IP data according to a wireless communications standard selected from a group of: {GPRS, CDMA, GSM, IEEE 802.11 b/g/n (Wi-Fi)}. In the alternative, the internet communications interface may be based on a wired communication channel such as twisted pair cabling carrying Asymmetric Digital Subscriber Line (ADSL) data signals, or an optical or coaxial cable. The Bluetooth or Wi-Fi access point inside the parking meter or utility device can for example wirelessly connect to the Bluetooth or Wi-Fi enabled mobile phone, PDA or smartphone. This allows the Bluetooth or Wi-Fi enabled mobile phone or PDA to connect to the Internet across a wireless Bluetooth communication channel or a WLAN channel and make a request for an IP address.

The Bluetooth or Wi-Fi access point may take advantage of an existing power supply in the parking meter or utility meter device such that power to the Bluetooth or Wi-Fi access point is supplied by the existing power supply. In one such embodiment, the parking meter or utility meter device comprises a housing enclosing a power supply for the internet communications interface and the Bluetooth access point is coupled to the power supply. The modest power consumption of a Bluetooth access point makes this type of integration particularly advantageous since the existing power supply for electronics of the internet communications interface may be utilized without any significant modification. Thus, saving costs and space associated with separate power supplies.

### BRIEF DESCRIPTION OF THE DRAWINGS

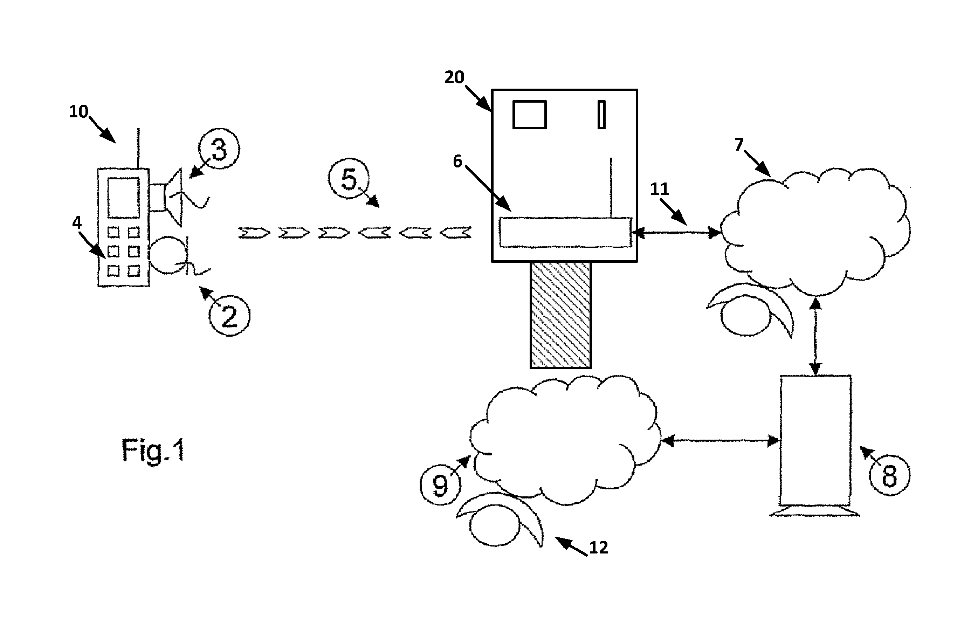

A preferred embodiment of the invention will be described in more detail in connection with the appended drawing, in which: Fig. 1 illustrates schematically a communication system comprising parking meter in accordance with a preferred embodiment of the present invention.

### DETAILED DESCRIPTION OF PREFERRED EMBODIMENTS

The communication system schematically shown in Fig. 1 comprises a Bluetooth enabled mobile telephone 10 including a microphone 2, a loudspeaker 3, a keyboard 4 and a Bluetooth interface (not shown) for establishing a Bluetooth connection 5 or Bluetooth communication link between the mobile telephone 10 and a Bluetooth access point 6. The Bluetooth access point 6 is arranged within a housing or casing of a parking meter 20. The Bluetooth access point 6 in addition comprises an internet communications interface (not shown) configured to receive and transmit TCP/IP data through a bi-directional data communications interface 11 according to a wireless communications standard such as IEEE 802.11 b/g/n (Wi-Fi). The skilled person will appreciate that a wired data communications interface 11 may be utilized instead such as twisted pair cabling carrying ADSL data signals. The parking meter 20 comprises appropriate means for printing and issuing appropriate parking permits to the users. The bi-directional data communications interface 11 may also be used to enable electronic payment of the issued parking permits for example by charging the user's credit card. The credit card or other electronic payment card may for example be inserted into a card reader housed in the parking meter.

The communication system schematically shown in Fig. 1 preferably comprises a plurality of parking meters 20 placed proximate to each other such that distances between individual parking meters are less than 200 m, or 100 m or 50 m. The parking meter 20 provides internet access 7 for the mobile telephone 10 through the bi-directional data communications interface 11. In order to provide a connection further on to a desired destination 12, a voice-over internet protocol (VoIP) server 8 is coupled to the internet 7, such that the VoIP server 8 is adapted to connect the mobile telephone 10 to the desired destination 12 through e.g. a public-switched telephone network (PSTN) 9. A software-implemented client or application is installed in the mobile phone 10 and the software-implemented client or client software provides Bluetooth connection 5 to the Bluetooth access point 6 and the mobile phone 10 receives an IP address via the Bluetooth connection 5. Via the acquired/received IP address, the software client provides a connection to the Viol P server 8 via the internet 7. Consequently, the mobile phone 10 is capable of calling any ordinary telephone and vice versa. As soon as a connection is established between the mobile phone 10 and the VoIP server 8, call-connectivity is provided between the mobile phone 10 and the PSTN 9.

When the user or subscriber initiates a call from the mobile phone 10 the software-implemented client installed in the mobile phone 10 sends data to the access point 6 via the Bluetooth connection 5 in order to make the built-in VoIP client call the desired destination 12 via the internet 7 and the VoIP server 8. As previously mentioned, the VoIP server 8 is connected to the public-switched telephone network (PSTN) 9 such that the mobile phone 10 is able to call any ordinary telephone at the destination 12 including mobile telephones and vice versa. As soon as a connection is established between the mobile phone 10 and the desired destination 12, a Bluetooth audio connection is provided between the Bluetooth access point 6 and the mobile phone 10, and a data connection between the mobile phone 10 and the access point 6 remains open in order to be able to send SMS data or other data based information between the mobile phone 1 and the access point 6 and the internet 7. The mobile phone 10 preferably executes a non-proprietary Operating System (OS) such as Android version 2.1, 2.2 or 3.1 etc. under which the software client is configured to provide the previously-mentioned VoIP connectivity. This means that the Bluetooth access point 6 does not need to have any part of the software client installed therein and will function as a Bluetooth access point without any functionality relating to the provision of the VoIP connection.

The present Bluetooth enabled mobile telephone 10 with the installed software-implemented client makes the mobile phone 10 capable of automatically providing any outgoing calls via accessible Bluetooth access points 6 for example housed within parking meters 20, utility meter devices, or vending machines. In this respect, the execution or running of the software-implemented client emulates the Bluetooth access point 6 connection to provide an IP address for the mobile telephone 10 and bringing the Bluetooth connection to function as any other data communication connection or channel possessing an IP address, such as Wi-Fi, DUN (dial-up network), etc. In use, the present communication system provides call connections for the Bluetooth enabled mobile telephone 10. The software-implemented client is adapted to detecting the presence of Bluetooth access points 6 and provides connections to such Bluetooth access points 6 to register the mobile telephone 10 on the internet with an IP address. Using the acquired IP address, connections to and from the mobile telephone can be provided through a VoIP server 8 establishing call connections in the form of any of PSTN, GSM, VoIP, and possible other types of call connections.

If the user or subscriber is moving around at home, in the office or in a city area, during a call, the client software is preferably adapted to continuously perform a detection of possible alternative Bluetooth access point having connection to the internet. In this manner the software-implemented client continuously tries to be registered with an IP address on the internet such that connections to and from the mobile telephone 10 may be established using the Bluetooth connection 5 and the IP address under control by said VoIP server 8 and the client software.

In a particular advantageous embodiment of the invention, the software-implemented client is adapted to establish a plurality of Bluetooth connections 5 between respective ones of a plurality of detected Bluetooth access points 6 housed in the respective parking meters 20. The software-implemented client may be adapted to monitor the quality of each of the established Bluetooth connections 5 and transmit the VoIP data through the Bluetooth connection with the highest quality. The quality of each of the Bluetooth connections 5 may be evaluated by detecting its packet loss. In this manner the software-implemented client is adapted to seamlessly hand-over the call-connection between individual parking meters if or when the mobile phone user moves about in the city area where the plurality of parking meters are arranged.

In the case that no Bluetooth access point is detected and the mobile telephone 10 is instructed to make a call, the software-implemented client may be adapted to automatically transmit a SMS message to a call-back module in the VOIP server 8. The SMS message containing information relating to the desired call such that a callback module in the VOIP server 8 is able to establish a connection to the desired destination 12 and perform a call-back to the mobile telephone 10 in order to make said connection between the mobile telephone 10 and the desired destination 12.

## Claims

1. A method of providing call connections from a Bluetooth or Wi-Fi enabled mobile telephone (10) to a destination (12) through a parking meter (20) or utility meter device (20), comprising steps of:
a) providing a Bluetooth or Wi-Fi access point (6) within a parking meter (20) or a utility meter device (20) connected to the internet (7),
b) providing an internet-connected VoIP server (8) for establishing call connections through a voice communications channel such as PSTN, GSM, VoIP to the destination (12),
c) executing a software-implemented client or application in said Bluetooth or Wi-Fi enabled mobile telephone (10) functioning as a call center controlling outgoing and incoming communications,
d) continuously detecting, by said Bluetooth or Wi-Fi enabled client, a presence of Bluetooth or Wi-Fi access points (6), respectively, in parking meters (20) or utility meter devices (20) with internet connection,
e) establishing a Bluetooth connection (5) between a detected Bluetooth access point (6) and the Bluetooth enabled mobile telephone (10) or establishing a Wi-Fi connection (5) between a detected Wi-Fi access point (6) and the Wi-Fi enabled mobile telephone (10),
f) connecting to the internet through the established Bluetooth or Wi-Fi connection (5) and acquiring an IP address for the Bluetooth or Wi-Fi enabled mobile telephone (10) whereby call connections to and from the Bluetooth or Wi-Fi enabled mobile telephone (10) can be established using the Bluetooth or Wi-Fi connection (5), said IP address and the VoIP server (8).

2. A method of providing call connections from a Bluetooth enabled mobile telephone according to claim 1, comprising, subsequent to step e), executing further steps of:
e1) establishing a plurality of Bluetooth connections (5) between a plurality of detected Bluetooth access points (6) housed in respective parking meters (20),
e2) monitoring a quality of each of the established Bluetooth connections (5),
e3) transmitting VoIP data through the Bluetooth connection with the highest quality.

3. A communication system comprising:
- a Bluetooth or Wi-Fi enabled mobile telephone (10) controlled by an operating system configured to execute a software-implemented client or application (18) stored in memory of the mobile telephone (10),
- a parking meter (20) or utility meter device (20) having a Bluetooth or Wi-Fi access point (6) installed therein and comprising an internet connection,
- an internet-connected VoIP server (8) providing call connections through a voice communications channel such as PSTN, GSM, VoIP,
- said software-implemented client or application being adapted to function as a call center controlling outgoing and incoming communications to be directed via a Bluetooth connection (5) between the mobile telephone (10) and the Bluetooth access point (6) and via the internet (7) to and from the VoIP server (8) controlling the call connections.

4. A communication system according to claim 3, wherein the software-implemented client or application (18) comprises a program routine or module for acquiring and registering an IP address of the mobile telephone (10) for receiving calls via VoIP.

5. A communication system according to any of claims 3-4, wherein the utility meter device (20) comprises a household utility meter such as an electricity meter, a petrol meter, a gas meter or a water meter.

6. A communication system according to any of claims 3-5, comprising a Bluetooth access point (6) which is compatible with an official Bluetooth standard, as adopted by the Bluetooth Special Interest Group, such as Bluetooth standards version 2.0, 2.1, 3.0, 3.0+HS and 4.0.

7. A communication system according to any of claims 3-6, comprising a Wi-Fi access point (6) which is compatible with anyone of the official IEEE 802.11 family of standards adopted by the Wi-Fi Alliance.

8. A communication system according to any of claims 3-7, wherein the parking meter (20), or the utility meter device (20), comprises an internet communications interface configured to receive and transmit TCP/IP data according to a wireless communications standard selected from a group of: {GPRS, CDMA, GSM, IEEE 802.11 b/g/n (Wi-Fi)}.

9. A communication system according to claim 8, wherein the parking meter (20) or utility meter device (20) comprises a housing enclosing a power supply for the internet communications interface; and
- wherein the Bluetooth or Wi-Fi access point (6) is coupled to the power supply.
